# EUROPEAN PATENT APPLICATION

(11) **EP 4 787 196 A1**
(43) Date of publication of application: **05.08.2026**
(21) Application number: 24870886.9
(22) Date of filing: 26.09.2024
(51) Int. Cl.: G06F 16/957

(54) **PAGE INTERACTION PROCESSING METHOD AND APPARATUS, DEVICE, AND STORAGE MEDIUM**

(30) Priority: 26.09.2023 CN 202311265133
(71) Applicant: Chengdu Guanghexinhao Technology Co., Ltd., Chengdu, Sichuan 610095 (CN)
(72) Inventor: LIU, Changxin, Beijing 100028 (CN); YANG, Ting, Beijing 100028 (CN)
(74) Representative: Isarpatent
(86) International application number: PCT/CN2024/121476
(87) International publication number: WO 2025/067346

(57) **Abstract**

The present disclosure provides an interface interaction processing method and apparatus, a device, and a storage medium. The method comprises: first, displaying a first anchor point on a first interface, first content of a target object corresponding to the first interface being displayed on the first anchor point; and then controlling the first content on the first anchor point to be switched and displayed as second content, the second content comprising recommended object information corresponding to the first content.

## Description

### CROSS-REFERENCE TO RELATED APPLICATION(S)

The present application claims priority to Chinese Patent Application No. 202311265133.7, filed on September 26, 2023, and entitled "INTERFACE INTERACTION PROCESSING METHOD, APPARATUS, AND DEVICE, AND STORAGE MEDIUM", which is incorporated herein by reference in its entirety.

### FIELD

The present disclosure relates to the field of data processing, and in particular to an interface interaction processing method, apparatus, and device, and a storage medium.

### BACKGROUND

With continuous development of computer technologies, various interface interaction functions emerge endlessly, users have increasingly diverse requirements for interface interaction functions, such as requirements for video-related interface interaction methods.

In order to meet the increasing number of diverse requirements of the users for interface interactions, how to further enrich video-related interface interaction functions is an urgent technical problem to be solved currently.

### SUMMARY

To solve the above-mentioned technical problem, embodiments of the present disclosure provide an interface interaction processing method.

According to a first aspect, the present disclosure provides an interface interaction processing method. The method includes:
displaying a first anchor on a first interface, where first content of a target object corresponding to the first interface is displayed on the first anchor; and
controlling the first content on the first anchor to switch to second content for display, where the second content includes recommended object information corresponding to the first content.

In an alternative implementation, the first interface is a playback interface of a target video, and the target object corresponding to the first interface includes a point of interest POI object corresponding to the target video.

In an alternative implementation, the method further includes:
displaying an object details interface corresponding to the target object in response to a trigger operation for the first anchor, and displaying a target recommended object corresponding to the recommended object information on the object details interface.

In an alternative implementation, the first content includes a recommended object type corresponding to the target object, and the second content includes recommended object information of a target recommended object belonging to the recommended object type.

In an alternative implementation, the recommended object type includes a virtual resource type, the target recommended object includes a target virtual resource object, and the second content includes object value information and/or applicable range information of the target virtual resource object.

In an alternative implementation, the method further includes:
displaying an object details interface for the target object in response to a trigger operation for the first anchor, and displaying a virtual resource obtaining pop-up window on the object details interface; and
obtaining the target virtual resource object based on the virtual resource obtaining pop-up window, where the target virtual resource object is used to trigger a preset interaction operation for the target object.

In an alternative implementation, the recommended object type includes a commodity resource type, the target recommended object includes a target commodity recommended object, and the second content includes at least one of an icon of the target commodity recommended object, object value information, obtaining-related data information, or popularity information of the target object.

In an alternative implementation, the method further includes:
displaying an object details interface for the target object in response to a trigger operation for the first anchor, and preferentially displaying the target commodity recommended object on the object details interface.

In an alternative implementation, controlling the first content on the first anchor to switch to the second content for display includes:
controlling the first content on the first anchor to switch, through a preset animation effect, to the second content for display.

In an alternative implementation, controlling the first content on the first anchor to switch to the second content for display includes:
controlling, in response to a preset condition being satisfied, the first content on the first anchor to switch to the second content for display,
where the preset condition includes at least one of the following: a display duration of the first anchor on the first interface reaching a first preset threshold, a target video played on the first interface being played to a preset time point, and a played duration of the target video played on the first interface reaching a second preset threshold.

According to a second aspect, the present disclosure provides an interface interaction processing apparatus. The apparatus includes:
a first display module configured to display a first anchor on a first interface, where first content of a target object corresponding to the first interface is displayed on the first anchor; and
a control module configured to control the first content on the first anchor to switch to second content for display, where the second content includes recommended object information corresponding to the first content.

According to a third aspect, the present disclosure provides a computer-readable storage medium, where the computer-readable storage medium stores instructions therein, and the instructions, when executed on a terminal device, cause the terminal device to implement the method described above.

According to a fourth aspect, the present disclosure provides an interface interaction processing device. The device includes: a memory, a processor, and a computer program that is stored on the memory and executable on the processor, where the processor, when executing the computer program, implements the method described above.

According to a fifth aspect, the present disclosure provides a computer program product. The computer program product includes a computer program/instruction. The computer program/instruction, when executed by a processor, causes the method described above to be implemented.

Compared with the related art, the technical solutions provided in the embodiments of the present disclosure have at least the following advantages:

The embodiments of the present disclosure provide an interface interaction processing method, in which the first anchor is first displayed on the first interface, where the first content of the target object corresponding to the first interface is displayed on the first anchor, and the first content on the first anchor is then controlled to switch to the second content for display, where the second content includes the recommended object information corresponding to the first content.

### BRIEF DESCRIPTION OF THE DRAWINGS

The accompanying drawings herein, which are incorporated into and form a part of the description, illustrate the embodiments in line with the present disclosure and are used in conjunction with the description to explain the principles of the present disclosure.

In order to more clearly illustrate the technical solutions in the embodiments of the present disclosure or in the related art, the accompanying drawings for describing the embodiments or the related art will be briefly described below. Apparently, those of ordinary skill in the art may still derive other drawings from these accompanying drawings without creative efforts.
FIG. 1 is a flowchart of an interface interaction processing method according to an embodiment of the present disclosure;
FIG. 2 is a schematic diagram of a playback interface of a target video according to an embodiment of the present disclosure;
FIG. 3 is a schematic diagram of another playback interface of a target video according to an embodiment of the present disclosure;
FIG. 4 is a schematic diagram of still another playback interface of a target video according to an embodiment of the present disclosure;
FIG. 5 is a schematic diagram of yet another playback interface of a target video according to an embodiment of the present disclosure;
FIG. 6 is a schematic structural diagram of an interface interaction processing apparatus according to an embodiment of the present disclosure; and
FIG. 7 is a schematic structural diagram of an interface interaction processing device according to an embodiment of the present disclosure.

### DETAILED DESCRIPTION OF EMBODIMENTS

For a clearer understanding of the above-mentioned objectives, features, and advantages of the present disclosure, the solutions of the present disclosure will be further described below. It should be noted that the embodiments of the present disclosure and the features in the embodiments may be combined with each other without conflict.

Many specific details are set forth in the following description to facilitate a full understanding of the present disclosure. However, the present disclosure may also be implemented in other ways different from those described herein. Apparently, the embodiments in the description are only some rather than all of the embodiments of the present disclosure.

With continuous development of computer technologies, various interface interaction functions emerge in endlessly, users have increasingly diverse requirements for interface interaction functions, such as requirements for video-related interface interaction methods.

In order to meet the increasing number of diverse requirements of the users for interface interactions, how to further enrich video-related interface interaction functions is an urgent technical problem to be solved currently.

To this end, in an interface interaction processing method provided in the embodiments of the present disclosure, a first anchor is first displayed on a first interface, where first content of a target object corresponding to the first interface is displayed on the first anchor, and the first content on the first anchor is then controlled to switch to second content for display, where the second content includes recommended object information corresponding to the first content. It can be learned that in the embodiments of the present disclosure, the control of the first content on the first anchor to switch to the second content for display allows a user to learn the recommended object information corresponding to the first content based on the first interface, and also allows an interface interaction function to be enriched, thereby improving the user experience.

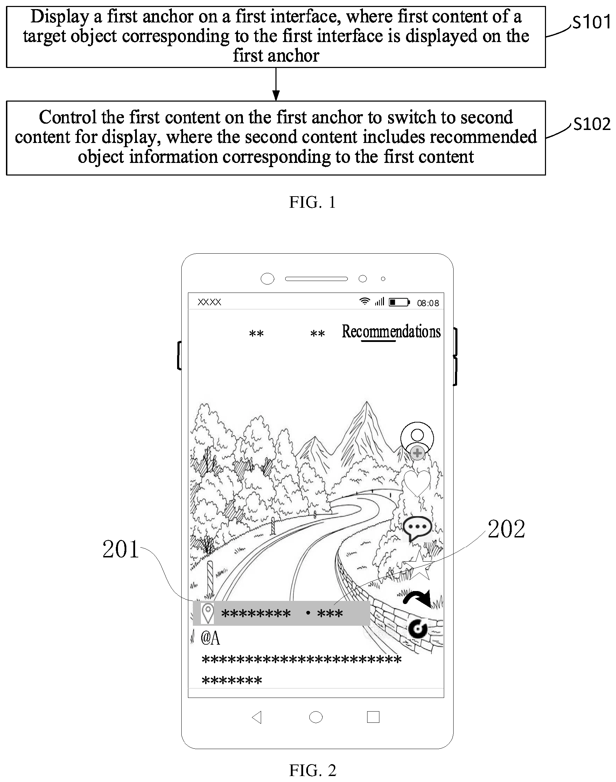

Based on this, an embodiment of the present disclosure provides an interface interaction processing method. FIG. 1 is a flowchart of an interface interaction processing method according to an embodiment of the present disclosure. The method includes the following steps.

S101: A first anchor is displayed on a first interface,
where first content of a target object corresponding to the first interface is displayed on the first anchor.

The interface interaction processing method provided in this embodiment of the present disclosure is applicable to a client. For example, the client may include a client deployed on a smartphone, a client deployed on a tablet computer, etc.

In the embodiments of the present disclosure, the first interface may include any interface. The first anchor is displayed on the first interface.

The first content is displayed on the first anchor. The first content is used to describe the target object, where the target object has a correspondence with the first interface. The target object may be an object related to the first interface, for example, an object displayed on the first interface, etc. An interface related to the target object may be triggered for display by triggering the first anchor.

S102: the first content on the first anchor is controlled to switch to second content for display,
where the second content includes recommended object information corresponding to the first content.

In the embodiments of the present disclosure, the recommended object information may include description information of a target recommended object corresponding to the first content. The target recommended object has an association relationship with the target object corresponding to the first interface. For example, the target recommended object is at least one of a plurality of recommended objects corresponding to the target object.

In this embodiment of the present disclosure, the switching of the first content to the second content for display allows for further raising of a user's attention to the first anchor, the user may trigger the first anchor to further learn about information related to the target recommended object corresponding to the recommended object information.

In an alternative implementation, in response to receiving a trigger operation of the user for the first anchor, an object details interface corresponding to the target object is displayed, and the target recommended object corresponding to the recommended object information is displayed on the object details interface.

The target recommended object is any of the target objects, and the recommended object information is used to describe the target recommended object.

In the interface interaction processing method provided in this embodiment of the present disclosure, the first anchor is displayed on the first interface, where the first content of the target object corresponding to the first interface is displayed on the first anchor, and the first content on the first anchor is then controlled to switch to the second content for display, where the second content includes the recommended object information corresponding to the first content. It can be learned that in this embodiment of the present disclosure, the control of the first content on the first anchor to switch to the second content for display allows the user to learn the recommended object information corresponding to the first content based on the first interface, and also allows an interface interaction function to be enriched, thereby improving the user experience.

To facilitate understanding of the content described above, in an embodiment of the present disclosure, the first interface is a playback interface of a target video, and the target object corresponding to the first interface includes a point of interest POI object corresponding to the target video. That is, the first content displayed on the first anchor that is displayed on the first interface is used to describe the point of interest POI object corresponding to the target video.

The target video is any video played on the playback interface. When the target video is played, the first anchor can be displayed synchronously, and the first content is displayed on the first anchor, where the first content describes the POI (point of interest) object. The point of interest POI object may be an object related to the target video, specifically, a commodity object in the target video, a related local service, etc.

FIG. 2 is a schematic diagram of a playback interface of a target video according to an embodiment of the present disclosure. A first anchor 201 is displayed on the playback interface, and first content 202 of a point of interest POI object corresponding to the target video is displayed on the first anchor 201.

In practical applications, when the first anchor is displayed on the first interface, in order to further improve the user experience when the first content is switched to the second content for display, in an embodiment of the present disclosure, a client controls the first content on the first anchor to switch to the second content for display in response to the client detecting that a preset condition is satisfied.

In an alternative implementation, the preset condition may include a display duration of the first anchor on the first interface reaching a first preset threshold, where the first preset threshold is a preset display duration of the first anchor on the first interface. That is, when the display duration of the first anchor on the playback interface reaches the preset display duration, the client controls the first content on the first anchor to switch to the second content for display.

In another alternative implementation, the preset condition may further include the target video played on the first interface being played to a preset time point, where the preset time point is a preset playback time point of the target video. For example, in the case where the target video has a playback duration of 5 minutes, the preset time point may be the fifth second of the target video, that is, when it is detected that the target video is played to the fifth second, the client controls the first content on the first anchor to switch to the second content for display.

In another alternative implementation, the preset condition may further include the played duration of the target video played on the first interface reaching a second preset threshold, where the second preset threshold is a preset played duration of the target video. For example, in the case where the target video has a playback duration of 5 minutes, the second preset threshold may be a played duration of the target video being 2 minutes, that is, when it is detected that the target video has been played for 2 minutes, the client controls the first content on the first anchor to switch to the second content for display.

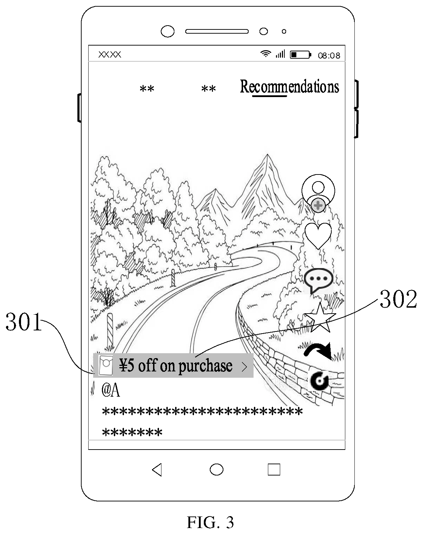

FIG. 3 is a schematic diagram of a playback interface of a target video according to an embodiment of the present disclosure. When a client detects that a preset condition is satisfied, the client controls the first content on a first anchor 301 to switch to second content 302 for display.

It should be noted that a target video remains in playback on the first interface before the first content on the first anchor is switched, and after the first content on the first anchor is switched to the second content.

In an embodiment of the present disclosure, in order to further prompt the user to perform a trigger operation on the first anchor, after the first content on the first anchor is switched to the second content, a preset marker may also be displayed on the first anchor to prompt the user to perform a related preset interaction operation on the first anchor, where the preset marker may be an icon such as an arrow.

In this embodiment of the present disclosure, where the first content on the first anchor is switched, based on the preset condition, to the second content for display, information related to the target object is further revealed to the user, which raises the user's attention, thereby improving the interaction experience of the user.

In practical applications, in the process that the client controls the first content on the first anchor to switch to the second content for display, in order to further raise the user's attention, in an embodiment of the present disclosure, the switching to the second content may be performed through a preset animation in the process that the client controls the first content switch on the first anchor to switch for display, thereby further raising the user's attention.

Specifically, the client controls the first content on the first anchor to switch, through a preset animation effect, to the second content for display. The preset animation effect is a preset animation form. For example, the first content may be switched, through a flip animation form, to the second content for display.

In the embodiments of the present disclosure, the first content displayed on the first anchor may include a recommended object type corresponding to the target object, and the second content includes recommended object information of the target recommended object belonging to the recommended object type, where the recommended object type has an association relationship with the target object. The recommended object type may specifically be: a benefit resource related to the target object, such as a limited-time offer, a group-buying offer, etc.; a virtual resource related to the target object, such as a red packet, a coupon, etc.; and a commodity resource related to the target object, such as a commodity store location, etc. The recommended object information is used to describe the target recommended object, where the target recommended object is an object that belongs to any recommended object type corresponding to the target object.

In an alternative implementation, in the case where it is detected that the recommended object type of the first content is the virtual resource type, when the client controls the first content on the first anchor to switch to the second content for display, the recommended object information of the second content may be object value information and/or applicable range information of a target virtual resource object, where the target recommended object is the target virtual resource object.

The target virtual resource object is any virtual resource object that belongs to the virtual resource type, and the recommended object information is used to describe the object value information and the applicable range information of the target virtual resource object. Specifically, the object value information may be the denomination of the virtual resource object, and the applicable range information may be an object of use, a lifespan, a use scenario, or the like of the virtual resource object.

Reference is made to the schematic diagram of the playback interface of the target video as shown in FIG. 3 as described above. The first anchor 301 is displayed on the playback interface, and in the case where it is detected that the recommended object type of the first content displayed on the first anchor is the virtual resource type, when the client controls the first content on the first anchor 301 to switch to the second content for display, the recommended resource object information of the second content is object value information and/or applicable range information of a target virtual resource object, where the target recommended object is the target virtual resource object. The recommended object information 302 corresponding to the target virtual resource object is displayed on the first anchor 301 that is displayed on the playback interface, as shown in FIG. 3.

In an embodiment of the present disclosure, when the second content is the object value information and/or the applicable range information of the target virtual resource object, an object details interface of the target object is displayed in response to receiving a trigger operation for the first anchor, and a virtual resource obtaining pop-up window is displayed on the object details interface. In this case, the target virtual resource object can be obtained by triggering a virtual resource obtaining operation.

In an alternative implementation, by using the virtual resource obtaining pop-up window displayed on the object details interface, the target virtual resource object is obtained in response to receiving a preset obtaining operation for the target virtual resource object, where the target virtual resource object can be used to trigger a preset interaction operation for the target object. For example, an ordering operation can be performed on a commodity object (the target object) with an obtained red packet (the target virtual resource object).

In an embodiment of the present disclosure, the corresponding preset interaction operation may be performed for the target object by obtaining the target virtual resource object, where the preset interaction operation may be set specifically based on the virtual resource object.

In an embodiment of the present disclosure, the recommended object type of the first content may further include the commodity resource type, and the commodity resource type may include a commodity package, a special offer, a local service, etc.

In an alternative implementation, in the case where it is detected that the recommended object type of the first content displayed on the first anchor is the commodity resource type, when the client controls the first content on the first anchor to switch to the second content for display, the target recommended object is a target commodity recommended object, and the recommended object information of the second content is at least one of an icon of the target commodity recommended object, object value information, obtaining-related data information, or popularity information of the target object.

The target commodity recommended object is any commodity recommended object that belongs to the commodity resource type, and the recommended object information of the second content is used to describe information related to the target commodity resource object. The object value information may specifically be a price of the target commodity recommended object. The obtaining-related data information is benefit information related to the target commodity recommended object, which may specifically be "No reservation needed for store group buying", or "Up to 70% off for store group buying". The popularity information of the target commodity recommended object is the popularity of the target commodity recommended object, which may specifically be the sales volume or positive review rate of the target commodity recommended object, for example, "The sales volume of the store exceeds 2000", or "The positive review rate reaches 99%".

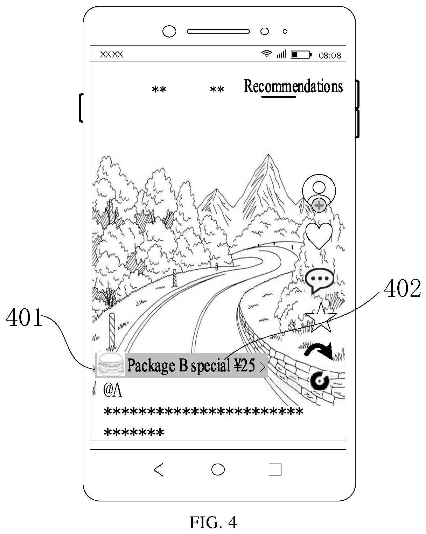

FIG. 4 is a schematic diagram of a playback interface of a target video according to an embodiment of the present disclosure. In the case where it is detected that a recommended object type of first content displayed on a first anchor 401 is a commodity package (the commodity resource type), when a client controls the first content on the first anchor 401 to switch to second content for display, recommended object information of the second content is at least one of an icon of a target commodity recommended object, object value information, obtaining-related data information, or popularity information of the target commodity recommended object. As shown in FIG. 4, the second content 402 is displayed on the first anchor 401.

In an embodiment of the present disclosure, after the first content on the first anchor is switched to the second content of the target commodity recommended object for display, an object details interface of the target object is displayed in response to receiving a trigger operation for the first anchor, and the target commodity recommended object is displayed preferentially on the object details interface.

In an embodiment of the present disclosure, the recommended object type of the first content may alternatively be the recommended resource type, where the recommended resource type may further include a POI type. Specifically, the POI type may be a group-buying offer.

In an alternative implementation, in the case where it is detected that the recommended object type of the first content is the recommended resource type, when the client controls the first content on the first anchor to switch to the second content for display, the target recommended object may be a POI recommended object, and the recommended object information of the second content is preset attention information corresponding to the POI recommended object, where the preset attention information may specifically be obtaining-related data information of the POI recommended object and/or the popularity information of the POI object.

The POI recommended object is any recommended object that belongs to the POI type, and the recommended object information is used to specifically describe details of the POI recommended object. Specifically, the recommended object information may be the obtaining-related data information of the POI recommended object or the popularity information of the POI recommended object.

The obtaining-related data information is benefit information related to the POI recommended object, which may specifically be "No reservation needed for store group buying", or "Up to 70% off for store group buying". The popularity information of the POI recommended object is the popularity of the POI recommended object, which may specifically be the sales volume or positive review rate of the POI recommended object, for example, "The store sales volume exceeds 2000.", or "The positive review rate reaches 99%."

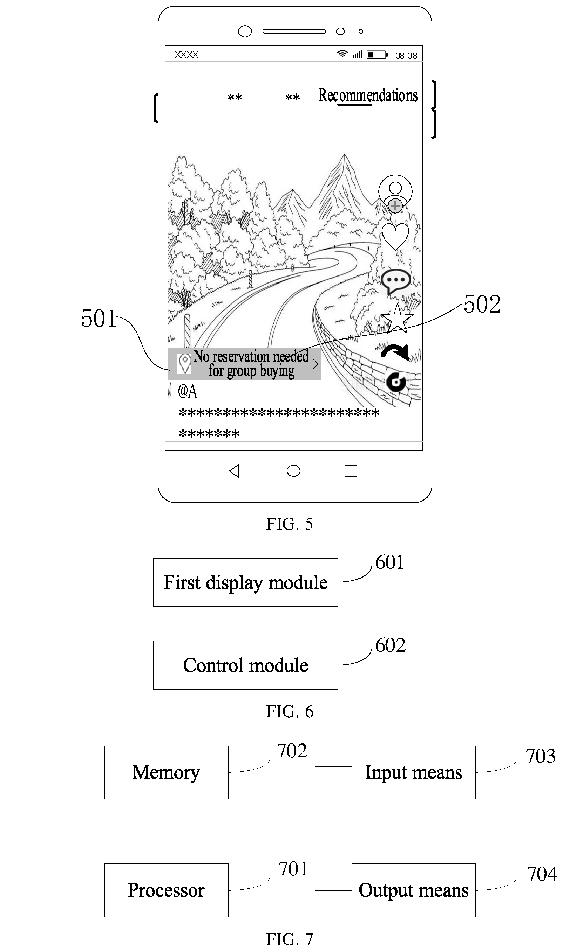

FIG. 5 is a schematic diagram of a playback interface of a target video according to an embodiment of the present disclosure. In the case where it is detected that a recommended object type of first content displayed on a first anchor is a POI type, when a client controls first content on a first anchor 501 to switch to second content for display, a target recommended object is a POI recommended object, and recommended object information is preset attention information corresponding to the POI recommended object. As shown in FIG. 5, preset attention information 502 of the POI recommended object is displayed on the first anchor 501.

In an embodiment of the present disclosure, after the first content on the first anchor is switched to the second content of the POI recommended object for display, an object details interface of the POI object is displayed in response to receiving a trigger operation for the first anchor, and the POI recommended object is displayed preferentially on the object details interface.

In this embodiment of the present disclosure, the display of the object details interface in response to the trigger operation for the first anchor and the preferential display of details of the target recommended object corresponding to the target object on the object details interface allow for enhancement of user awareness of the first anchor, thereby raising the interaction experience of the user.

Based on the above-mentioned method embodiment, the present disclosure further provides an interface interaction processing apparatus. FIG. 6 is a schematic structural diagram of an interface interaction processing apparatus according to an embodiment of the present disclosure. The apparatus includes:
a first display module 601 configured to display a first anchor on a first interface, where first content of a target object corresponding to the first interface is displayed on the first anchor; and
a control module 602 configured to control the first content on the first anchor to switch to second content for display, where the second content includes recommended object information corresponding to the first content.

In an alternative implementation, the first interface is a playback interface of a target video, and the target object corresponding to the first interface includes a point of interest POI object corresponding to the target video.

In an alternative implementation, the apparatus further includes:
a second display module configured to display an object details interface corresponding to the target object in response to a trigger operation for the first anchor, and display a target recommended object corresponding to the recommended object information on the object details interface.

In an alternative implementation, the first content includes a recommended object type corresponding to the target object, and the second content includes recommended object information of a target recommended object belonging to the recommended object type.

In an alternative implementation, the recommended object type includes a virtual resource type, the target recommended object includes a target virtual resource object, and the second content includes object value information and/or applicable range information of the target virtual resource object.

In an alternative implementation, the apparatus further includes:
a third display module configured to display an object details interface for the target object in response to a trigger operation for the first anchor, and display a virtual resource obtaining pop-up window on the object details interface; and
an obtaining module configured to obtain the target virtual resource object based on the virtual resource obtaining pop-up window, where the target virtual resource object is used to trigger a preset interaction operation for the target object.

In an alternative implementation, the recommended object type includes a commodity resource type, the target recommended object includes a commodity recommended object, the target recommended object includes a target commodity recommended object, and the second content includes at least one of an icon of the target commodity recommended object, object value information, obtaining-related data information, or popularity information of the target object.

In an alternative implementation, the apparatus further includes:
a fourth display module configured to display an object details interface for the target object in response to a trigger operation for the first anchor, and preferentially display the target commodity recommended object on the object details interface,

In an alternative implementation, the control module is specifically configured to:
control the first content on the first anchor to switch, through a preset animation effect, to the second content for display.

In an alternative implementation, the control module is specifically configured to:
control, in response to a preset condition being satisfied, the first content on the first anchor to switch to the second content for display,
where the preset condition includes at least one of the following: a display duration of the first anchor on the first interface reaching a first preset threshold, a target video played on the first interface being played to a preset time point, and a played duration of the target video played on the first interface reaching a second preset threshold.

In the interface interaction processing apparatus provided in this embodiment of the present disclosure, the first anchor is first displayed on the first interface, where the first content of the target object corresponding to the first interface is displayed on the first anchor, and the first content on the first anchor is then controlled to switch to the second content for display, where the second content includes the recommended object information corresponding to the first content. It can be learned that in this embodiment of the present disclosure, the control of the first content on the first anchor to switch to the second content for display allows the user to learn the recommended object information corresponding to the first content based on the first interface, and also allows an interface interaction function to be enriched, thereby improving the user experience.

In addition to the method and apparatus described above, an embodiment of the present disclosure further provides a computer-readable storage medium having instructions stored therein. The instructions, when executed on a terminal device, cause the terminal device to implement the interface interaction processing method described in the embodiments of the present disclosure.

An embodiment of the present disclosure further provides a computer program product. The computer program product includes a computer program or instructions. The computer program or instructions, when executed by a processor, cause the interface interaction processing method described in the embodiments of the present disclosure to be implemented.

In addition, an embodiment of the present disclosure further provides an interface interaction processing device. As shown in FIG. 7, the device may include:
a processor 701, a memory 702, an input means 703, and an output means 704. There may be one or more processors 701 in the interface interaction processing device. For example, there is one processor in FIG. 7. In some embodiments of the present disclosure, the processor 01, the memory 702, the input means 703, and the output means 704 may be connected through a bus or in another manner, for example, are connected through the bus in FIG. 7.

The memory 702 may be configured to store a software program and a module. The processor 701 performs various functional applications of the interface interaction processing device and processes data by executing the software program and the module stored in the memory 702. The memory 702 may mainly include a program storage area and a data storage area. The program storage area may store an operating system, an application required by at least one function, and the like. In addition, the memory 702 may include a high-speed random-access memory, and may further include a non-volatile memory, such as at least one magnetic disk storage device, a flash memory device, or other volatile solid-state storage devices. The input means 703 may be configured to receive entered numerical or character information, and generate a signal input related to a user setting and function control of the interface interaction processing device.

Specifically, in this embodiment, the processor 701 loads an executable file corresponding to a process of one or more applications into the memory 702 in accordance with the following instructions, and the processor 701 runs the application stored in the memory 702, to implement various functions of the interface interaction processing device described above.

It should be noted that the relational terms such as "first" and "second" herein are only used to distinguish one entity or operation from another, and do not necessarily require or imply that any actual relationship or sequence exists between these entities or operations. Moreover, the terms "include", "including", "comprise" and "comprising", or any of their variants are intended to cover a non-exclusive inclusion, so that a process, method, article, or device that includes a list of elements not only includes those elements but also includes other elements that are not expressly listed, or further includes elements inherent to such process, method, article, or device. In the absence of more restrictions, an element defined by "including/comprising a/an ..." does not exclude another identical element in a process, method, article, or device that includes the element.

The above description illustrates merely specific implementations of the present disclosure, so that those skilled in the art can understand or implement the present disclosure. Various modifications to these embodiments are apparent to those skilled in the art, and the general principle defined herein may be practiced in other embodiments without departing from the spirit or scope of the present disclosure. Therefore, the present disclosure will not be limited to the embodiments described herein, but extends to the widest scope that complies with the principles and novelty disclosed in this specification.

## Claims

1. An interface interaction processing method, comprising:
displaying a first anchor on a first interface, wherein first content of a target object corresponding to the first interface is displayed on the first anchor; and
controlling the first content on the first anchor to switch to second content for display, wherein the second content comprises recommended object information corresponding to the first content.

2. The method according to claim 1, wherein the first interface is a playback interface of a target video, and the target object corresponding to the first interface comprises a point of interest POI object corresponding to the target video.

3. The method according to claim 1, further comprising:
displaying an object details interface corresponding to the target object in response to a trigger operation for the first anchor, and displaying a target recommended object corresponding to the recommended object information on the object details interface.

4. The method according to claim 1, wherein the first content comprises a recommended object type corresponding to the target object, and the second content comprises recommended object information of a target recommended object belonging to the recommended object type.

5. The method according to claim 4, wherein the recommended object type comprises a virtual resource type, the target recommended object comprises a target virtual resource object, and the second content comprises object value information and/or applicable range information of the target virtual resource object.

6. The method according to claim 5, further comprising:
displaying an object details interface for the target object in response to a trigger operation for the first anchor, and displaying a virtual resource obtaining pop-up window on the object details interface; and
obtaining the target virtual resource object based on the virtual resource obtaining pop-up window, wherein the target virtual resource object is used to trigger a preset interaction operation for the target object.

7. The method according to claim 4, wherein the recommended object type comprises a commodity resource type, the target recommended object comprises a target commodity recommended object, and the second content comprises at least one of an icon of the target commodity recommended object, object value information, obtaining-related data information, or popularity information of the target commodity recommended object.

8. The method according to claim 7, further comprising:
displaying an object details interface for the target object in response to a trigger operation for the first anchor, and preferentially displaying the target commodity recommended object on the object details interface.

9. The method according to claim 1, wherein controlling the first content on the first anchor to switch to the second content for display comprises:
controlling the first content on the first anchor to switch, through a preset animation effect, to the second content for display.

10. The method according to claim 1, wherein controlling the first content on the first anchor to switch to the second content for display comprises:
controlling, in response to a preset condition being satisfied, the first content on the first anchor to switch to the second content for display,
wherein the preset condition comprises at least one of the following: a display duration of the first anchor on the first interface reaching a first preset threshold, a target video played on the first interface being played to a preset time point, and a played duration of the target video played on the first interface reaching a second preset threshold.

11. An interface interaction processing apparatus, comprising:
a first display module configured to display a first anchor on a first interface, wherein first content of a target object corresponding to the first interface is displayed on the first anchor; and
a control module configured to control the first content on the first anchor to switch to second content for display, wherein the second content comprises recommended object information corresponding to the first content.

12. A computer-readable storage medium having instructions stored therein, wherein the instructions, when executed on a terminal device, cause the terminal device to implement the method according to any of claims 1 to 10.

13. An interface interaction processing device, comprising: a memory, a processor, and a computer program that is stored on the memory and executable on the processor, wherein the computer program, when executed by the processor, causes the method according to any of claims 1 to 10 to be implemented.
